# EUROPEAN PATENT APPLICATION

(11) **EP 2 937 195 A1**
(43) Date of publication of application: **28.10.2015**
(21) Application number: 13889235.1
(22) Date of filing: 09.07.2013
(51) Int. Cl.: B28C 5/46, B28B 1/08, B28B 1/14, B28B 11/04

(54) **METHOD FOR MANUFACTURING HIGH-STRENGTH CEMENT CURED PRODUCT**

(71) Applicant: SE Corporation, Tokyo 163-1343 (JP)
(72) Inventor: TAKIZAWA Tsutomu, Tokyo 163-1343 (JP)
(74) Representative: Vossius & Partner Patentanwälte Rechtsanwälte mbB
(86) International application number: PCT/JP2013/068704
(87) International publication number: WO 2015/004723

(57) **Abstract**

A method for manufacturing a high-strength cement cured product constituted by: mixing and kneading cement with at least water and water-reducing agent; putting the cement kneaded mixture (5) into a vacuum device and removing air and dehydrating by vacuum evacuation; forming an impermeable coating layer (7) on the surface of the cement kneaded mixture (5) contained in a container inside the vacuum device (1) and then exposing the cement kneaded mixture (5) to atmospheric pressure; and then curing the cement kneaded mixture (5). This enables it to be hardened while having a reduced air amount. Thereby, a high-strength cement cured product having high compressive strength can be obtained.

## Description

### TECHNICAL FIELD

The present invention is related to a high-strength cement cured product and a manufacturing method thereof, and more specifically, a method for manufacturing a high-strength cement cured product with vacuum evacuation.

### BACKGROUND ART

Concerning conventional development of high-strength, i.e. a compressive strength no less than 100MPa, PTL 1, for example, discloses a hydraulic composite material including inorganic solid particles A with particle diameters from 50Å to 0.5µm, solid particles B with particle diameters from 0.5 to 100µm and at least one order greater than that of the particles A, surface active dispersant, and additional materials C, such as sands, stones, metal fibers, etc. The hydraulic composite material appears a compressive strength from 100 to 150 N/mm² after cured.

PTL 2 discloses a hydraulic composition including (A) weight parts of cement with Blaine's specific surface area from 2,500 to 5,000 cm²/g, (B) 10 to 40 weight parts of fine particles with BET specific surface area from 5 to 25cm²/g, (C) 20 to 55 weight parts of inorganic particles with Blaine's specific surface area from 3,000 to 30,000 cm²/g and greater than that of the cement, and (D) aggregate with particle diameters no greater than 2mm and where the content of particles with particle diameters no greater than 75µm is no more than 2.0% by weight. The ratio of the amount of the aggregate (D) to the total amount of the cement (A), the fine particles (B) and the inorganic particles (C) is 30 to 130 weight parts to 100 weight parts. A cement cured product using the hydraulic composition appears a compressive strength from 200 to 220N/mm².

One example of conventionally known methods for defoaming a cement kneaded mixture is a defoaming method by vibrating a cement kneaded mixture provided in a formwork, which is disclosed in PTL 3.

In PTL 4, the cement cured product is kneaded to have a high flow value, agitated and decompressed by decompressing means to reduce its air amount. The cement kneaded mixture using the hydraulic material disclosed in PTL 1 or 2 is mixed with a comparatively large amount of air during kneaded. This makes the air amount, measured by a mortar air meter, in the kneaded mixture to be approximately from 4 to 7%, when the kneading is finished. The existence of such a large amount of air is a factor hindering the intensity reappearance of the cement cured product. Thus, it is desirable to reduce the air amount.

### Prior Art Documents

### Patent Literatures

PTL 1: JP 55-500863 A (WO 80/00959 A1)
PTL 2: JP 2002-338324 A
PTL 3: JP 8-151733A
PTL 4: JP 2009-6541 A

### SUMMARY OF THE INVENTION

### Problem To Be Solved

However, when the cement kneaded mixture with its air amount reduced by kneading the cement under the decompression to defoam it, as disclosed in PTL 4, is put back to the atmospheric pressure, air is re-intruded through gaps of the cement kneaded mixture kneaded so as to have a predetermined flow value. This makes it difficult to drastically enhance the compressive strength of the cement cured product appeared after curing. This is a problem.

The present invention is proposed to solve the problem by providing a cement cured product and a manufacturing method thereof, which enables to drastically enhance the compressive strength and a flexural strength by defoaming cement kneaded mixture kneaded so as to appear a compressive strength no less than 100MPa, reducing its air amount and its water cement ratio under a decompressed atmosphere, and retaining the low air amount when the cement kneaded mixture is put back to the atmospheric pressure.

### Means To Solve The Problem

A method for manufacturing a high-strength cement cured product according to the present invention is constituted by: mixing and kneading cement with at least water and water-reducing agent to obtain cement kneaded mixture; putting the cement kneaded mixture into a vacuum device, and removing air and dehydrating by vacuum evacuation; forming an impermeable coating layer on the surface of the cement kneaded mixture contained in a vacuum vessel of the vacuum device, and then exposing the cement kneaded mixture to atmospheric pressure; and then curing the cement kneaded mixture.

The impermeable coating layer is preferable to be either of water film and oil film. The impermeable coating layer is preferable to be water film formed by vibrating or agitating the cement kneaded mixture under decompression to raise up water inside the cement kneaded mixture.

The exposing of the inside of the vacuum vessel of the vacuum device to atmospheric pressure is preferable to be performed by putting either one of air and inert gas into the vacuum vessel.

A high-strength cement cured product according to the present invention is manufactured by the aforementioned method for manufacturing a cement cured product.

### Effect Of The Invention

According to the method for manufacturing the high-strength cement cured product of the present invention, the impermeable coating layer is formed on the surface of the cement kneaded mixture after air removal and dehydration by vacuum evacuation. This prevents air from intruding into the cement kneaded mixture when the cement kneaded mixture is exposed to the atmospheric pressure. This results in retaining the reduced air amount of the cement kneaded mixture. Curing the cement kneaded mixture enables to manufacture a cement cured product, such as concrete, with high compressive strength. Moreover, the equipment and manufacturing process are easy. This reduces manufacturing cost. These excellent effects are achieved.

### Brief Description Of The Drawings

Fig. 1 is a sectional elevation view schematically showing a whole outline configuration of a vacuum device 1 in a method for manufacturing a high-strength cement cured product according to the present invention.
Fig. 2 is a sectional elevation view schematically showing a process for defoaming and dehydrating a cement kneaded mixture 5 in the vacuum device 1 in the method for manufacturing the high-strength cement cured product according to the present invention.
Fig. 3 is a sectional elevation view schematically showing a process for forming an impermeable coating layer 7 on a surface of the cement kneaded mixture 5 after the defoaming and dehydration in the method for manufacturing the high-strength cement cured product according to the present invention.
Fig. 4 is a sectional elevation view schematically showing a situation after exposed to the atmosphere in the method for manufacturing the high-strength cement cured product according to the present invention.

### Embodiments

A method for manufacturing a high-strength cement cured product according to the present invention is constituted by: a first process for obtaining cement kneaded mixture; a second process for removing air and dehydrating by vacuum evacuation; a third process for forming a impermeable coating layer on a surface of the cement kneaded mixture and then putting the reduced pressure back to atmospheric one, so as to prevent re-drawing air, etc.; and a fourth process for curing the cement kneaded mixture.

### First Embodiment

In the method for manufacturing a high-strength cement cured product according to the present invention, first, in the first process, cement is mixed with at least water and water-reducing agent, and kneaded. The cement kneaded mixture 5 is composed of Portland cement, silica fume, water-reducing agent, and water, for example. An example of the weight part ratios is 1:0.1:0.015:0.16, respectively. The flow value of the cement kneaded mixture 5 is not limited in particular.

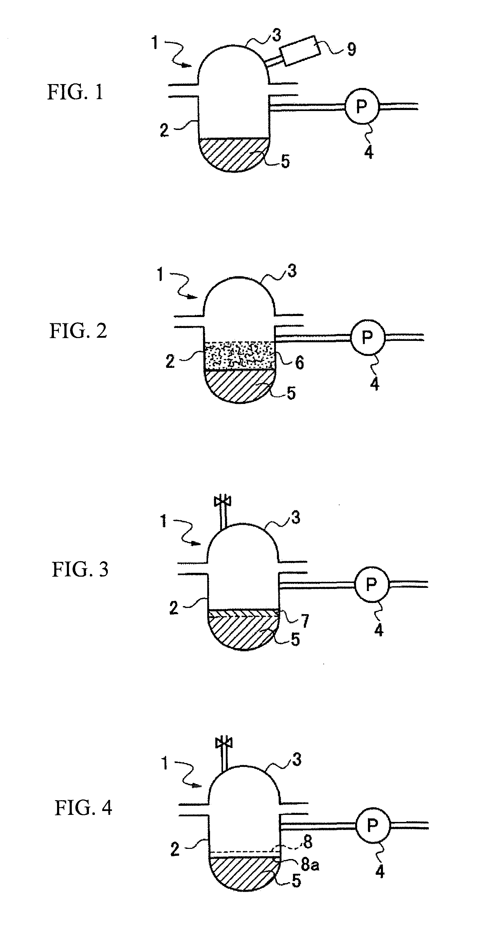

Next, in the second process, the cement kneaded mixture 5 is put into a vacuum vessel 2 of a vacuum device 1, as shown in Fig. 1. After it is sealed by a cap 3, defoaming, i.e. air removal, and dehydration is performed by vacuum evacuation, as shown in Fig. 2. A vacuum pump 4 is driven for vacuum evacuation until the inside of the vacuum vessel 2 and the cap 3 becomes 4000Pa. This achieves defoaming of air, etc., and dehydration of water, steam, etc., from inside of the cement kneaded mixture 5. The duration of vacuum evacuation is approximately from 2 minutes to 10 minutes, for example.

At the defoaming and dehydration in the second process, it is preferable that the vacuum vessel 2 is vibrated by vibrator, etc., and/or the cement kneaded mixture 5 is agitated. It is also preferable that an antibubble agent is used for eliminating bubbles formed by the defoaming. This prevents the vacuum pump 4 from drawing bubbles in.

This restrains performance degradation and lifetime shortening of the vacuum pump 4. Moreover, the cement kneaded mixture 5 may be heated by microwave so as to improve efficiency of the dehydration. It may be proposed to make a water/cement ratio as small as possible.

In the third process, following the second process, an impermeable coating layer 7 is formed on the surface of the cement kneaded mixture 5 contained in the vacuum vessel 2 of the vacuum device 1, as shown in Fig. 3. Then, the cement kneaded mixture 5 is exposed to the atmospheric pressure. The forming of the impermeable coating layer 7 aims to prevent air, etc., in the atmosphere from being mixed again into the cement kneaded mixture 5. The impermeable coating layer 7 is, for example, either one of water film and oil film.

In the case that the impermeable coating layer 7 is water film, the cement kneaded mixture 5 under decompression may be finely vibrated by a vibrator, etc., so as to raise up water inside the cement kneaded mixture 5 to its surface. Because large force applying the cement kneaded mixture 5 makes the water film drawn inside, the agitating or vibration operation of this process is preferable to be small. In the case of insufficient forming of the impermeable coating layer 7 by vibration, water, oil, a surfactant, etc., may be provided on the cement kneaded mixture 5 from providing device, such as a hose or a tube, connected to the vacuum vessel 2.

Exposing the inside of the vacuum vessel 2 of the vacuum device 1 to the atmospheric pressure may be performed by putting gas, such as air, inert gas, etc., in it.

Putting the reduced pressure back to atmospheric one in the vacuum vessel 2 of the vacuum device 1 lowers a liquid surface of the cement kneaded mixture 5, from a liquid surface 8 to a liquid surface 8a shown in Fig. 4. This enables to keep the air content of the cement kneaded mixture 5 low, for example, no greater than 3%, while ensuring that the water content of inside of the cement kneaded mixture 5 is not less than 0.16 in the aforementioned weight part ratios.

It should be noted that the vacuum evacuation for a long time makes the surface of the cement kneaded mixture 5 dry, and thereby forming hollows having the same shape as defoamed bubbles, in the cement kneaded mixture 5. This hinders change of the level of the liquid surface of the cement kneaded mixture 5 when it is exposed to the atmospheric pressure.

In the fourth process, following the third process of putting the reduced pressure back to atmospheric one, the cement kneaded mixture 5 is brought out of the vacuum device 1, put into a formwork, etc., and cured by steam curing, etc. This produces a high-strength cement cured product enhanced its compressive strength and its flexural strength.

### Industrial Applicability

The high-strength cement cured product and the manufacturing method thereof according to the present invention can be broadly applied to methods for manufacturing concrete, because it is an easy method using devices having simple configuration.

### Description of Signs

1: vacuum device, 2: vacuum vessel, 3: cap, 4 vacuum pump, 5 cement kneaded mixture, 6: bubble, 7: impermeable coating layer, 8: liquid surface at vacuum evacuation, 8a: liquid surface after releasing under atmosphere, and 9: pressure gauge.

## Claims

1. A method for manufacturing a high-strength cement cured product, the method comprising:
mixing and kneading cement with at least water and water-reducing agent to obtain cement kneaded mixture;
putting the cement kneaded mixture into a vacuum vessel of a vacuum device, and vacuum-evacuating the inside of the vacuum vessel to bring the cement kneaded mixture under decompression, thereby removing air and dehydrating;
forming an impermeable coating layer on the surface of the cement kneaded mixture contained in the vacuum vessel of the vacuum device, and then exposing the cement kneaded mixture to atmospheric pressure; and
then curing the cement kneaded mixture.

2. The method according to Claim 1, wherein the impermeable coating layer is either of water film and oil film.

3. The method according to Claim 2, wherein the impermeable coating layer is water film formed by vibrating or agitating the cement kneaded mixture under decompression to raise up water inside the cement kneaded mixture.

4. The method according to anyone of Claims 1 to 3, wherein the exposing of the inside of the vacuum vessel of the vacuum device to atmospheric pressure is performed by putting either one of air and inert gas into the vacuum vessel.

5. A high-strength cement cured product, manufactured by the method according to Claims 1 to 4.
